# EUROPÄISCHE PATENTANMELDUNG

(11) **EP 1 958 811 A2**
(43) Veröffentlichungstag der Anmeldung: **20.08.2008**
(21) Anmeldenummer: 08000607.5
(22) Anmeldetag: 15.01.2008
(51) Int. Cl.: B60K 11/04, F28F 9/00

(54) **Schutzvorrichtung für einen Wärmetauscher eines Kraftfahrzeugs**

(30) Priorität: 13.02.2007 DE 102007007607
(71) Anmelder: Behr GmbH & Co. KG, 70469 Stuttgart (DE)
(72) Erfinder: Steurer, Hans-Ulrich, 70376 Stuttgart (DE)
(74) Vertreter: Grauel, Andreas

(57) **Zusammenfassung**

Die Erfindung betrifft eine Schutzvorrichtung für einen Wärmetauscher (1) eines Kraftfahrzeugs, welcher mit mindestens einer Anbindungsstelle, insbesondere einem Zapfen (5), ausgebildet ist, die der Anbringung des Wärmetauschers (1) an einer tragenden Struktur des Kraftfahrzeugs dient, wobei die Schutzvorrichtung mindestens ein ein- oder mehrteilig ausgebildetes Seitenteil (1a; 1a') für den Wärmetauscher (1) aufweist, das in einer Richtung, die der normalen Luftanströmrichtung des Wärmetauschers (1) entspricht, fest mit dem Wärmetauscher (1) verbunden ist, und das entgegen der Luftanströmrichtung gegenüber dem Wärmetauscher (1) vorstehend ausgebildet ist.

## Beschreibung

Die Erfindung betrifft eine Schutzvorrichtung für einen Wärmetauscher, der im Frontbereich eines Kraftfahrzeugs angeordnet ist, gemäß dem Oberbegriff des Anspruchs 1.

Aus der DE 10 2004 003 197 A1 ist ein passives System in Form einer Befestigungseinrichtung für einen Wärmetauscher bekannt, welche den Ölkühler eines Kraftfahrzeug betrifft. Hierbei weist die Einrichtung Aufnahmen mit Führungen sowie mit diesen korrespondierende Zapfen auf, wobei die Befestigungseinrichtung den Wärmetauscher bei einer einen vorgegebenen Wert übersteigenden Krafteinwirkung zumindest annäherungsweise beschädigungsfrei freigibt. Der Ölkühler weist an seinen gegenüberliegenden schmalen Stirnseiten jeweils zwei Zapfen auf, die mit dem Ölkühler fest verbunden oder einstückig mit demselben ausgebildet sind. Auf jeden Zapfen ist ein flachringartiges Gummielement aufgeschoben, welches zumindest außenseitig eine Profilierung aufweist. Jeder der Zapfen samt Gummielement ist in einer einseitig geöffneten Führung angeordnet, welche den Zapfen samt Gummielement in einem Winkel von über 180°, insbesondere in einem Winkel von 220° bis 300°, umgreift, so dass der Zapfen und somit auch der Ölkühler vorgespannt gehalten ist.

Aus der EP 1 247 681 A2 ist eine Befestigungseinrichtung für einen Fahrzeug-Wärmetauscher bekannt, die einen Block aufweist, der an einem kreuzförmigen Element angebracht ist, welches eine Vertiefung aufweist. Die Vertiefung weist zwei kreisförmige Bereiche auf, die über einen Bereich mit geringerer Breite als der Durchmesser der kreisförmigen Bereiche, miteinander verbunden sind, wobei der Zapfen vom ersten kreisförmigen Bereich bei Überschreiten einer Grenzkraft, also insbesondere im Crashfall, in den zweiten kreisförmigen Bereich verschoben wird.

Derartige Befestigungseinrichtungen lassen jedoch noch Wünsche offen, insbesondere im Falle einer Verwendung bei Fallstromwärmetauschern.

Es ist Aufgabe der Erfindung, eine Schutzvorrichtung für einen Wärmetauscher zur Verfügung zu stellen, der im Frontbereich eines Kraftfahrzeugs angeordnet ist. Dabei soll im Crashfall der Wärmetauscher möglichst unbeschädigt bleiben. Insbesondere soll eine Verschiebung eines Querträgers, der vor dem Wärmetauscher angeordnet ist und im Crashfall auf denselben zu bewegt wird, keine Schäden am Wärmetauscher hervorrufen.

Diese Aufgabe wird gelöst durch eine Schutzvorrichtung mit den Merkmalen des Anspruchs 1. Vorteilhafte Ausgestaltungen sind Gegenstand der Unteransprüche.

Erfindungsgemäß ist eine Schutzvorrichtung für einen Wärmetauscher eines Kraftfahrzeugs vorgesehen, welcher mit mindestens einer Anbindungsstelle, insbesondere bevorzugt mittels eines Zapfens, ausgebildet ist, die der Anbringung des Wärmetauschers an einer tragenden Struktur des Kraftfahrzeugs dient, wobei die Schutzvorrichtung mindestens ein ein- oder mehrteilig ausgebildetes Seitenteil für den Wärmetauscher aufweist, das in einer Richtung, die der normalen Luftanströmrichtung des Wärmetauschers entspricht, fest mit dem Wärmetauscher verbunden ist, und das entgegen der Luftanströmrichtung gegenüber dem Wärmetauscher vorstehend ausgebildet ist. Bevorzugt ist beidseitig des Wärmetauschers ein derartiges Seitenteil angeordnet. Die im Crashfall auftretenden Belastungen werden hierbei durch das mindestens eine Seitenteil direkt (oder indirekt über ein Zwischenelement) abgefangen und vom Seitenteil über einen Bereich eines Sammelkastens an eine Anbindungsstelle des Wärmetauschers weitergeleitet.

Beim Wärmetauscher handelt es sich vorzugsweise um einen Fallstromwärmetauscher mit mindestens einem in horizontaler Richtung verlaufend angeordneten Sammelkasten. Besonders bei derartigen Wärmetauschern treten Probleme in Bezug auf die Befestigung desselben unter Berücksichtigung der Voraussetzung, dass im Crashfall keine Beschädigungen des Wärmetauschers erfolgen sollen, auf. Durch das Vorsehen der Seitenteile kann dem Wärmetauscher eine ausreichende Stabilität verliehen werden, dass keine Verformungen desselben im Bereich des Wärmetauschernetzes erfolgen. Ferner wird durch die erfindungsgemäße Ausgestaltung des Wärmetauschers mit den vorstehenden Seitenteilen eine Krafteinwirkung auf das Wärmetauschernetz im Vorfeld vermieden und die Kräfte werden über die Seitenteile direkt zu den Anbindungsstellen abgeleitet, so dass der Kraftfluss nicht durch das Wärmetauschernetz erfolgt.

Das Seitenteil ist vorzugsweise in mindestens einer Richtung senkrecht zur Anströmrichtung relativ zum Wärmetauscher verschiebbar. Dies ermöglicht zum einen eine leichte Montage des Seitenteils am Wärmetauscher, zum anderen kann sich der Wärmetauscher im Falle der üblicherweise auftretenden Abmessungsänderungen in Folge von Temperaturänderungen ausdehnen, ohne dass die Bewegungen zu Verspannungen in Bezug auf das Seitenteil führen.

Bevorzugt ist am Seitenteil mindestens ein mit demselben verbundenes Prallelement angebracht, welches im Crashfall eine Kraft direkt an das Seitenteil weiterleitet ohne in Kontakt mit dem Wärmetauschernetz des Wärmetauschers zu gelangen. Das Prallelement kann hierbei in Kraftwirkungsrichtung bereichsweise verformbar sein, bevorzugt ist es jedoch starr ausgebildet und dient lediglich der großflächigen Krafteinleitung in das Seitenteil, so dass Spannungsspitzen vermieden werden.

Im Falle einer Verformbarkeit des Prallelements ist vorzugsweise die bei der maximalen Aufprallkraft eines Elements, auf welche die Schutzvorrichtung ausgelegt ist, auftretende Verformung des Prallelements maximal so groß, dass die vorderste Fläche des Prallelements, welche in Kontakt mit dem aufprallenden Element gelangt ist, räumlich vor der Frontfläche des Wärmetauschernetzes angeordnet ist. Somit kann eine direkte Krafteinwirkung auf das Wärmetauschernetz vermieden werden.

Besonders bevorzugt ist das Seitenteil mindestens zweiteilig ausgebildet, wobei die beiden Seitenteile durch das Prallelement miteinander verbunden sind, wobei das Prallelement eine Relativbewegung der Seitenteile in Richtung einer Verbindungslinie der Seitenteile zulässt und eine Bewegung in einer Ebene senkrecht zur Verbindungslinie der Seitenteile verhindert. Das Prallelement dient hierbei der großflächigen Krafteinleitung in die Seitenteile, so dass Spannungsspitzen vermieden oder zumindest reduziert werden können. Die Verschiebbarkeit in Längsrichtung der Seitenteile kann relativ gering sein, ist jedoch vorzugsweise so bemessen, dass üblicherweise auftretende Abmessungsänderungen in Folge von Wärmedehnungen, ohne dass Spannungen auftreten, durch eine relative Verschiebbarkeit von Prallelement und Seitenteilen ausgeglichen werden können.

Ein besonders kostengünstig herstellbares Seitenteil kann durch ein durchgehendes Profil, beispielsweise ein L-Profiil oder ein C-Profil gebildet sein. Insbesondere bevorzugt sind derartige Metallprofile.

Eine sehr einfache aber ausreichend sichere Anbringung des Seitenteils am Wärmetauscher bieten Clipsverbindungen. In Richtung der Kraftübertragung ist jedoch vorzugsweise ein Formschluss gegeben.

Alternativ kann das Seitenteil mittels einer Führung, insbesondere bevorzugt mittels einer Schwalbenschwanzführung, am Wärmetauscher in Längsrichtung des Seitenteils zumindest leicht verschiebbar angebracht sein. Das Halten des Seitenteils in einer Endstellung kann beispielsweise durch einen an einem Ende vorgesehenen Anschlag oder durch eine Clipsverbindung erfolgen, wobei eine gewisse Relativbewegung in Längsrichtung vorgesehen sein kann.

Eine besonders einfache und relativ kostengünstige Anbringungsmöglichkeit für das Seitenteil ist eine am Boden eines Sammelkastens ausgebildete Lasche. In der Lasche kann beispielsweise eine Öffnung vorgesehen sein, durch weiche ein Ende des Seitenteils ragt, oder durch welche ein Verbindungselement, wie beispielsweise ein Bolzen, gesteckt ist, mit dessen Hilfe Boden und Seitenteil fest miteinander verbunden sind.

Das Seitenteil kann alternativ (oder ggf. auch an der anderen Seite des Seitenteils) an einem am Kasten des entsprechenden Sammelkastens ausgebildeten Fortsatz angebracht sein. Im Falle einer Ausbildung als Kunststoffspritzgussteil kann dieser Fortsatz kostengünstig hergestellt werden. Ferner kann er gleichzeitig zur Erhöhung der Stabilität des Sammelkastens dienen.

Besonders bevorzugt sind direkt am Seitenteil endseitig sich nach außen erstreckende Zapfen ausgebildet, welche als Anbindungsstellen des Wärmetauschers dienen und welche in die Befestigungseinrichtungen des Wärmetauschers eingreifen. Zapfen können alternativ auch am Kasten des Wärmetauschers ausgebildet sein, d.h. der Kraftfluss erfolgt dann vom Seitenteil zum Kasten weiter über die Zapfen.

Das Seitenteil ist vorzugsweise direkt zwischen zwei Zapfen angeordnet, wobei die durch die Zapfen verlaufende Achse das Seitenteil in zumindest einem Bereich schneidet.

Eine derartige Schutzvorrichtung ist bevorzugt Teil einer Wärmetauscheranordnung mit einem an einem Träger mittels einer Befestigungseinrichtung angebrachten Wärmetauscher, wobei Teil der Schutzvorrichtung für den Wärmetauscher mindestens eine Befestigungseinrichtung mit einer Sollbruchstelle ist, welche bei Überschreiten einer in Richtung der normalen Luftanströmung des Wärmetauschers wirkenden Grenzlast eine begrenzte Relativbewegung des Wärmetauschers zu einem Träger zulässt, zwischen denen die Befestigungseinrichtung angeordnet und an dem der Wärmetauscher angebracht ist.

Die Schutzvorrichtung wirkt vorzugsweise in Kombination mit einer Befestigungseinrichtung für den Wärmetauscher, wobei am Wärmetauscher mindestens ein Zapfen vorgesehen ist, welcher in einer eine erste Öffnung bildenden Aufnahme der Befestigungseinrichtung formschlüssig anordenbar ist, und die Befestigungseinrichtung benachbart der Aufnahme für den Zapfen eine Sollbruchstelle und einen durch eine zweite Öffnung gebildeten Ausweichbereich aufweist. Dabei ist der Ausweichbereich insbesondere in der gewünschten Bewegungsrichtung des Zapfens im Crashfall auf der Seite, die der Sollbruchstelle gegenüber liegt, geschlossen ausgebildet, d.h. durch das Vorsehen einer zweiten Öffnung kann der Bewegungsweg des Zapfens gezielt beschränkt werden. Die Aufnahme ist bevorzugt formschlüssig bezüglich des Zapfens ausgebildet, d.h. es ist an mindestens drei Stellen ein Kontakt oder maximal ein geringes Spiel zwischen Zapfen und Aufnahme vorhanden, wobei ggf. auch ein schwingungsdämpfendes Element oder eine sonstige gleichwirkende Zwischenlage, insbesondere eine Beschichtung, zwischen dem Zapfen und der Aufnahme mit Sollbruchstelle vorgesehen sein kann. An Stelle eines Wärmetauschers kann auch das gesamte Kühlmodul, also Kühler, Lüfterzarge, Lüfter und weitere Wärmeübertrager, wie Kondensator, Ladeluftkühler und Ölkühler, mit Hilfe einer entsprechender Befestigungseinrichtungen crashsicher befestigt werden. Der in die Aufnahme eingeführte Zapfen ist bevorzugt am zu befestigenden Teil ausgebildet oder angebracht, jedoch ist auch eine Ausgestaltung möglich, gemäß der Zapfen an der Befestigungsstruktur, also bspw. dem Fahrzeugrahmen, und die Aufnahme mit Sollbruchstelle am oder im Bereich des zu befestigenden Teiles vorgesehen sein kann.

Die Sollbruchstelle ist vorzugsweise an oder in einem plattenförmigen Element, bevorzugt einem Kunststoff- oder Leichtmetallelement, ausgebildet. Anstelle eines getrennt von einem Träger ö.ä. vorgesehenen und an demselben angebrachten plattenförmigen Element kann auch der Träger direkt entsprechend ausgebildet sein. Hierbei können am plattenförmigen Element (oder Träger) jedoch auch Vorsprünge, Vertiefungen usw. vorgesehen sein. Im Bereich um die Sollbruchstelle herum ist das Element jedoch vorzugsweise mit im Wesentlichen konstanter Materialdicke ausgebildet, wobei sich diese im Bereich der Sollbruchstelle zur Einstellung der Auslöse- oder Grenzkraft ändern kann.

Das Element, insbesondere das plattenförmige Element, mit Sollbruchstelle wird vorzugsweise von einem Träger gehalten, welcher bevorzugt durch den Fahrzeugrahmen gebildet oder hieran möglichst spielfrei befestigt ist. Dabei ist das Element vorzugsweise austauschbar ausgebildet, wofür am Träger und/oder am Element bevorzugt Führungen, insbesondere nutförmige Aufnahmen vorgesehen sind, so dass das Element einfach eingeschoben werden kann.

Die Sollbruchstelle wird bevorzugt durch einen Steg gebildet. Dabei kann der Steg im Bereich der Sollbruchstelle abgewinkelt und/oder mit mindestens einer Einkerbung versehen sein. Durch das Vorsehen von Knicken und/oder Einkerbungen lässt sich die Sollbruchstelle auf einfache Weise festlegen und sicherstellen, dass der Steg nicht an einer anderen Stelle bricht. Ferner kann die Dicke des Steges sich von der Materialdicke des benachbarten Bereichs unterscheiden. Zur Erhöhung der für ein Brechen des Stegs an der Sollbruchstelle erforderlichen Grenzkraft kann die Materialdicke erhöht, zur Verringerung der Grenzkraft verringert werden.

Der Steg kann durch einen Stab oder ein anderes langgestrecktes Element gebildet sein, insbesondere durch einen Stab, der in ein plattenförmiges Element eingeschoben ist, wofür im plattenförmigen Element eine durchgehende Öffnung vorgesehen ist, so dass der Stab im eingeschobenen Zustand die vorzugsweise als Langloch ausgebildete Öffnung in die Aufnahme und den Ausweichbereich unterteilt. Alternativ kann im plattenförmigen Element eine Nut vorgesehen sein, in welcher der Stab oder das langgestreckte Element ausreichend fixiert angeordnet ist. Als plattenförmiges Element kann auch ein Bereich eines Trägers dienen, so dass die Befestigungseinrichtung direkt durch eine Öffnung im Träger und einen Steg, gebildet durch einen Stab oder ein anderes, langgestrecktes Element, zur Verfügung gestellt wird.

Bevorzugt weist der Wärmetauscher o.ä., der von einer oder mehreren, bevorzugt vier, derartigen Befestigungseinrichtungen gehalten wird, Verstärkungsstrukturen, insbesondere Rippen, bevorzugt im Bereich der Sammelkästen auf, um ein Durchbiegen des Wärmetauschers im Crashfall zu minimieren. Die größte Durchbiegung entsteht dort, wo der Stoßfänger auf den Wärmetauscher trifft. Haben die Sammelkästen, an welchen die Zapfen angeordnet sind, eine Verstärkungsstruktur, so werden die Sammelkästen, abhängig von der Steifigkeit der Verrippung, weniger stark durchgebogen, wodurch der Rest des Wärmetauschers (also die Böden, Rohre und Rippen) weniger belastet wird. Ist die Verstärkungsstruktur nur in den Bereichen geringster Durchbiegung, also üblicherweise in der Nähe der Zapfen, mit dem oder den Sammelkästen verbunden, dann biegt sich die Verstärkungsstruktur durch, der oder die Sammelkästen biegen sich jedoch nicht oder nur in verringertem Maße durch, wodurch eine Belastung des Rests des Wärmetauschers weiter vermindert wird.

Die Zapfen der Befestigungseinrichtung sind bevorzugt zylinderförmig ausgebildet, jedoch können sie auch andere Querschnittsformen aufweisen, insbesondere mit quadratischem, rechteckigem, hexagonalem, oktagonalem oder ovalem Querschnitt ausgebildet sein.

Ebenfalls müssen die Zapfen nicht notwendigerweise am Wärmetauscher angebracht sein, sondern vielmehr können die Zapfen auch am Fahrzeugrahmen o.ä. und das Element mit Sollbruchstelle am Wärmetauscher angebracht sein, wobei ggf. auch Mischformen der Anbringung möglich sind, d.h. bspw. auf einer Seite sind die Zapfen am Wärmetauscher und auf der anderen Seite am Fahrzeugrahmen ausgebildet. Besonders bevorzugt sind die Zapfen oben und unten an den Sammelkästen eines Wärmetauschers angeordnet, jedoch können die Zapfen auch an anderer Stelle, insbesondere auch seitlich an einem Wärmetauscher, angeordnet sein.

Die Bewegungsverläufe im Crashfall müssen nicht notwendigerweise rein translatorisch sein, sondern es ist vielmehr auch eine Rotation und insbesondere eine Kombination von Translation und Rotation möglich. Der Bewegungsverlauf wird festgelegt durch die Form des Langloches, welche als Kulissenbahn für den entsprechenden Zapfen dient, und ggf. auch im Crashfall feststehende Punkte, welche in diesem Fall bevorzugt als Schwenkachsen ausgebildet sind, also bspw. um Lagerungen von Zapfen ohne Sollbruchstelle. Ein Schwenken erfolgt auch dann, wenn die Grenzkraft für ein Freigeben des entsprechenden Zapfens an einzelnen Befestigungseinrichtungen, bspw. auf einer Seite, nicht erreicht wird.

Bevorzugt ist eine Befestigungseinrichtung als Festlager und die anderen Befestigungseinrichtungen als Loslager an oder in Trägem, die bevorzugt vom Fahrzeugrahmen gebildet oder an demselben angebracht sind, angeordnet, so dass ein spannungsfreier Einbau möglich ist, ohne die Funktion der Befestigungseinrichtungen im Crashfall zu beeinträchtigen.

Im Folgenden wird die Erfindung anhand von Ausführungsbeispielen unter Bezugnahme auf die Zeichnung im Einzelnen erläutert. In der Zeichnung zeigen:
- Fig. 1: eine ausschnittsweise Seitenansicht eines Wärmetauschers mit einer Befestigungsvorrichtung gemäß dem ersten Ausführungsbeispiel,
- Fig. 2: eine Detailansicht eines Wärmetauschers gemäß einer ersten Variante,
- Fig. 3: eine explosionsartige Ansicht des Seitenbereichs von Fig. 2,
- Fig. 4: einen Schnitt entlang Linie IV-IV in Fig. 3,
- Fig. 5: eine Detailansicht eines Wärmetauschers gemäß einem zweiten Ausführungsbeispiel ohne Prallelement,
- Fig. 6: eine Teilansicht eines Prallelements, wie es für den Wärmetauscher von Fig. 5 verwendet werden kann,
- Fig. 7: eine Draufsicht auf das Prallelement von Fig. 6,
- Fig. 8: eine Draufsicht auf ein Prallelement gemäß einer Variante,
- Fig. 9: eine Detailansicht eines Wärmetauschers gemäß einem dritten Ausführungsbeispiel,
- Fig. 10: einen Schnitt entlang Linie X-X in Fig. 9,
- Fig. 11: eine Detailansicht eines Wärmetauschers gemäß einem vierten Ausführungsbeispiel,
- Fig. 12: einen Schnitt entlang Linie XII-XII in Fig. 11,
- Fig. 13: einen Schnitt entlang Linie XIII-XIII in Fig. 12,

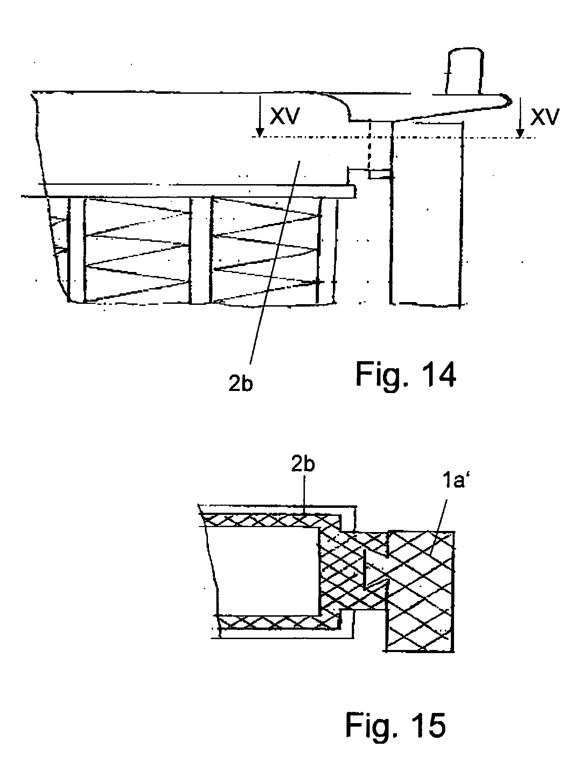

- Fig. 14: eine Detailansicht eines Wärmetauschers gemäß einem fünften Ausführungsbeispiel,
- Fig. 15: einen Schnitt entlang Linie XV-XV in Fig. 14,
- Fig. 16: eine Detailansicht eines Wärmetauschers gemäß einem sechsten Ausführungsbeispiel,
- Fig. 17: eine Detailansicht eines Wärmetauschers gemäß einem siebten Ausführungsbeispiel,
- Fig. 18: eine Draufsicht auf den Wärmetauscher von Fig. 17,
- Fig. 19: eine Detailansicht eines Wärmetauschers gemäß einem achten Ausführungsbeispiel,
- Fig. 20: einen Schnitt entlang Linie XX-XX in Fig. 19,
- Fig. 21: eine perspektivische Darstellung eines Ausschnitts eines Kraftfahrzeug-Frontbereichs mit eines ersten Ausführungsbeispiels einer Befestigungseinrichtung,
- Fig. 22: eine Draufsicht auf die Befestigungseinrichtung von Fig. 21,
- Fig. 23: eine Draufsicht auf eine Befestigungseinrichtung gemäß einem zweiten Ausführungsbeispiel einer Befestigungseinrichtung,
- Fig. 24: eine Draufsicht auf eine Befestigungseinrichtung gemäß einem dritten Ausführungsbeispiel einer Befestigungseinrichtung,
- Fig. 25: eine Draufsicht auf eine Befestigungseinrichtung gemäß einem vierten Ausführungsbeispiel einer Befestigungseinrichtung,
- Fig. 26a-c: perspektivische Darstellungen von drei Varianten von Sollbruchelementen mit unterschiedlichen Querschnitten,
- Fig. 27: einem Schnitt durch eine erste Anbringungsmöglichkeit einer Befestigungseinrichtung an einem Fahrzeugrahmen oder einer anderen mit dem Fahrzeugrahmen fest verbundenen Struktur,
- Fig. 28: eine perspektivische, aufgebrochene Darstellung der Anbringung einer Befestigungseinrichtung entsprechend Fig. 27,
- Fig. 29: eine erste Variante der Anbringungsmöglichkeit einer Befestigungseinrichtung,
- Fig. 30: eine schematische Schnittdarstellung durch die Anbringungsmöglichkeit von Fig. 29,
- Fig. 31: einen Schnitt durch eine zweite Variante einer Anbringungsmöglichkeit einer Befestigungseinrichtung,
- Fig. 32: einen Schnitt durch eine dritte Variante einer Anbringungsmöglichkeit einer Befestigungseinrichtung,
- Fig. 33: eine perspektivische, aufgebrochene Darstellung der Anbringung einer Befestigungseinrichtung entsprechend Fig. 32,
- Fig. 34: einen Schnitt durch eine Abwandlung der dritten Variante einer Anbringungsmöglichkeit einer Befestigungseinrichtung,
- Fig. 35: eine Frontansicht eines Wärmetauschers,
- Fig. 36a: eine Seitenansicht des Wärmetauschers von Fig. 35,
- Fig. 36b: eine Seitenansicht des Wärmetauschers von Fig. 35 mit schematisch und übertrieben dargestellter Durchbiegung im Crashfall,
- Fig. 37: eine Frontansicht eines anderen Wärmetauschers,
- Fig. 38a: eine Seitenansicht des Wärmetauschers von Fig. 37,
- Fig. 38b: eine Seitenansicht des Wärmetauschers von Fig. 37 mit schematisch und übertrieben dargestellter Durchbiegung im Crashfall,
- Fig. 39: eine perspektivische, aufgebrochene Darstellung einer vierten Variante einer Anbringungsmöglichkeit einer Befestigungseinrichtung,
- Fig. 40: eine perspektivische, aufgebrochene Darstellung einer Befestigungseinrichtung gemäß einer ersten Variante des zweiten Ausführungsbeispiels einer Befestigungseinrichtung von Fig. 23 in Verbindung mit einer weiteren Variante einer Anbringungsmöglichkeit derselben,
- Fig. 41: eine perspektivische, aufgebrochene Darstellung einer Befestigungseinrichtung gemäß einer zweiten Variante des zweiten Ausführungsbeispiels einer Befestigungseinrichtung von Fig. 3,
- Fig. 42: eine perspektivische Darstellung einer weiteren Anbringungsmöglichkeit einer Befestigungseinrichtung gemäß dem zweiten Ausführungsbeispiel einer Befestigungseinrichtung,
- Fig. 43: eine schematische Schnittdarstellung durch eine Befestigungseinrichtung mit einem Zapfen, der in eine im Träger vorgesehene Öffnung ragt,
- Fig. 44: eine schematische Schnittdarstellung durch eine Befestigungseinrichtung mit einem Zapfen gemäß einer alternativen Ausführungsform,
- Fig. 45: eine schematische Schnittdarstellung durch eine Befestigungseinrichtung zur Verdeutlichung der Anbringung am Träger, und
- Fig. 46: eine perspektivische Explosionsdarstellung einer Befestigungseinrichtung gemäß einer Variante des vierten Ausführungsbeispiels einer Befestigungseinrichtung von Fig. 25.

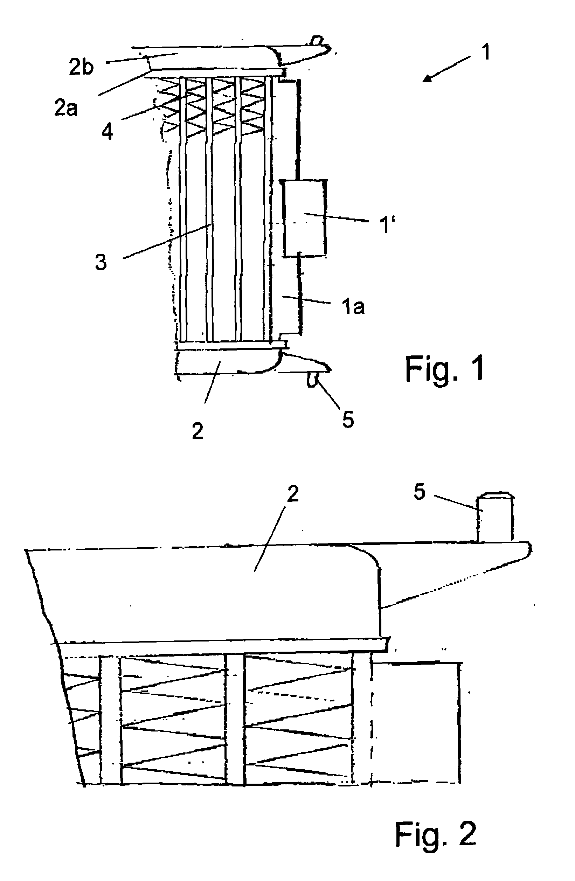

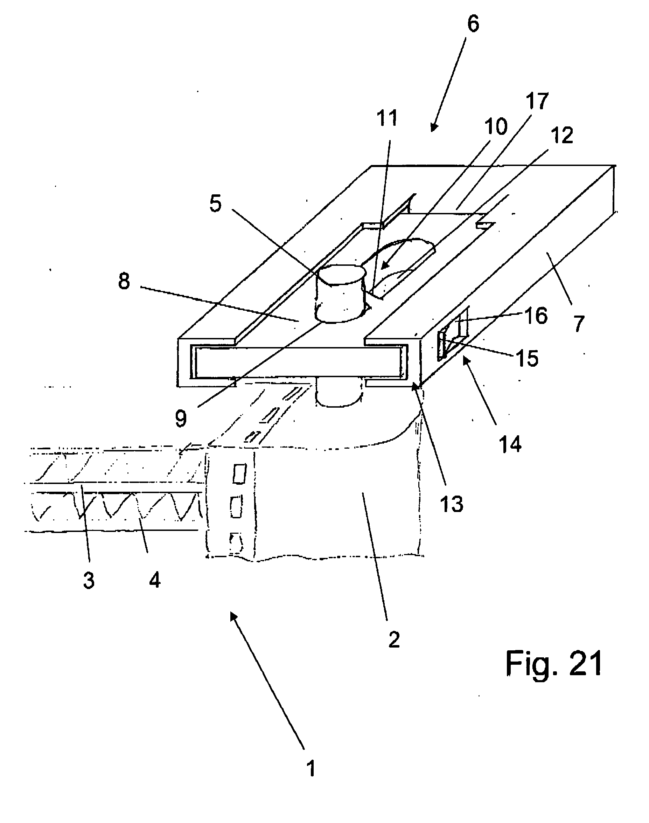

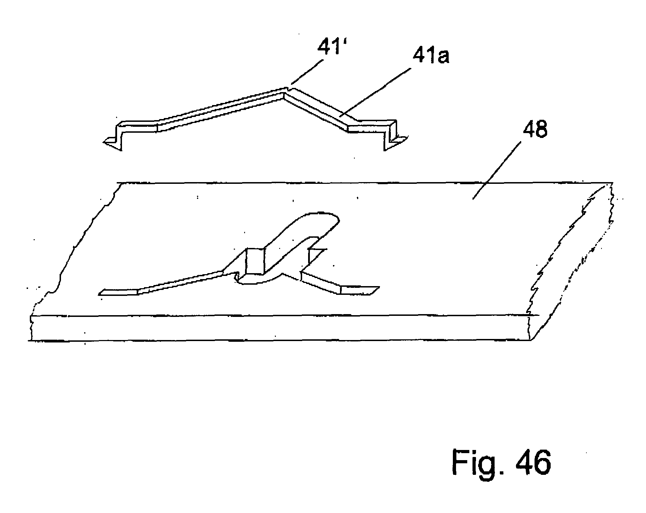

Eine Wärmetauscheranordnung im Frontbereich eines Kraftfahrzeugs weist einen Wärmetauscher 1 auf, vorliegend einen Kühlmittelkühler mit oben und unten angeordneten Sammelkästen 2 (Fallstromwärme-übertrager mit oben und unten angeordneten Sammelkästen 2, gebildet durch einen Boden 2a und einen Kasten 2b) und dazwischen verlaufend angeordneten Flachrohren 3 und Wellrippen 4, wie in Fig. 1 schematisch dargestellt. Dieser Wärmetauscher 1 ist seitlich oben und unten jeweils mittels Zapfen 5 über Befestigungseinrichtungen 6 derart angebracht, dass bei Überschreiten einer Grenzkraft eine Ausweichbewegung des Wärmetauschers 1 nach hinten möglich ist, d.h. es ist eine Relativbewegung zu einem Träger möglich, wobei die eine Ausweichbewegung auslösende Grenzkraft derart bemessen ist, dass eine bleibende Verformung des Wärmetauschers 1 sicher ausgeschlossen ist. Die Anbringung mittels der Befestigungseinrichtung 6 kann auch direkt am Fahrzeugrahmen erfolgen, wofür jener entsprechend ausgebildet ist. Ebenfalls können auch zusätzliche Sollbruchstellen und/oder im Crashfall nachgiebige Bereiche oder Elemente zwischen Träger und Fahrzeugrahmen vorgesehen sein. Auf die konkrete Ausgestaltung der Befestigungseinrichtungen 6 wird an späterer Stelle, unter Bezugnahme auf die Figuren 21 bis 46 näher eingegangen.

Auf Grund seiner Position im Frontbereich eines Kraftfahrzeugs gelangt der Wärmetauscher 1 im Falle eines entsprechend starken Aufprall des Fahrzeugs in Kontakt mit einem etwa mittig in horizontaler Richtung vor dem Wärmetauscher 1 verlaufenden Querträger (nicht dargestellt), welcher hinter der Stoßstange des Fahrzeugs verläuft. Dieser Querträger verformt sich - gemeinsam mit dem weiteren Frontbereich des Fahrzeugs - im Crashfall, so dass er an den Wärmetauscher 1 gedrückt werden kann. Da der Querträger beim Crash üblicherweise gerade nach hinten auf den Wärmetauscher 1 zu geschoben wird, trifft er etwa in der Mittelebene auf den Wärmetauscher 1.

Das Seitenteil des Wärmetauschers 1 gemäß dem ersten Ausführungsbeispiel ist so stabil ausgebildet, dass es die in Folge eines Auftreffens des Querträgers auftretenden Kräfte aufnehmen und eine (bleibende) Verformung des Wärmetauschers 1 verhindern kann, wobei ein Seitenteil 1 a fest mit dem Boden und Kasten verbunden ist, vorliegend mittels einer verlöteten Steckverbindung, so dass die Kräfte an den Boden und Kasten und somit an die Befestigungseinrichtungen 6 weitergeleitet werden können, ohne dass sich der Wärmetauscher 1 selbst bleibend verformt. Um Kraftspitzen in den Aufprallbereichen gleichmäßig zu verteilen, ist auf dem vorliegend U-förmig ausgebildeten Seitenteil 1 a außenseitig ein Prallelement 1' angebracht, vorliegend angeclipst. Dieses Prallelement 1' gelangt im Crashfall als erstes in Kontakt mit dem Querträger und leitet die Aufprallkraft desselben großflächig in das Seitenteil 1a ein.

Das Prallelement kann alternativ auch angeschraubt, angeklemmt oder auf sonstige Weise am Seitenteil 1a (und/oder ggf. auch einem anderen Bereich des Wärmetauschers 1) angebracht sein, wobei die Kraftübertragung vom Querträger auf den Wärmetauscher 1 jedoch in jedem Fall im Bereich des Seitenteils 1 a und nicht im Bereich des Wärmetauschernetzes (Flachrohre/Wellrippen) erfolgt.

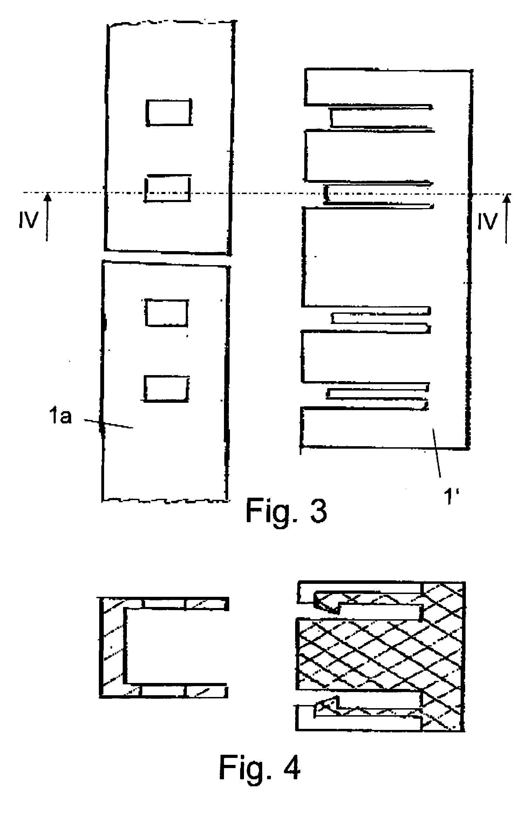

Gemäß einer ersten Variante des Wärmetauschers 1 ist das Seitenteil 1a unterbrochen ausgebildet (siehe Fig. 3, links), um die Wärmeausdehnung der Flachrohre 3 nicht zu behindern. Das Problem der Kraftweiterleitung wird dadurch gelöst, dass das Prallelement 1' durchgehend ausgebildet ist, wobei es in Bewegungsrichtung des Querträgers (Blickrichtung von Fig. 3) starr ausgebildet ist, d.h. das Prallelement 1' liegt direkt an den einzelnen Seitenteilen 1 a an und sorgt für eine direkte Kraftweiterleitung, jedoch in Richtung der Wärmeausdehnung des Wärmetauschers 1 (Blickrichtung Fig. 4) in Form eines Fest-Los-Lagers mit den Seitenteilen 1 a verbunden ist, d.h. die einzelnen Seitenteile 1 a können sich in dieser Richtung relativ zueinander ohne Behinderung durch das Prallelement 1' bewegen. Das Prallelement 1' ist vorliegend mittels Clipsverbindungen an den U-förmig ausgebildeten und mit Öffnungen für einen Eingriff der Federarme des Prallelements 1' versehenen Seitenteilen 1a angebracht. Die Öffnungen für die Federarme sind auf der Front- und Rückseite der Seitenteile 1a ausgebildet. Die Federarme des Prallelements 1' greifen von außen her in diese Öffnungen ein. Das Prallelement ist derart ausgebildet, dass es endseitig mit einem Rand übersteht, zwischen den Federarmen angeordnet einen Block aufweist, welcher zwischen den Schenkeln der Seitenteile 1 a angeordnet ist, und Materialpartien zwischen den Federarmen aufweist, welche außenseitig der Seitenteile 1a angeordnet sind und die Seitenteile 1 a von außen her schützten und einen direkten Aufprall des Querträgers auf die Seitenteile 1a verhindern.

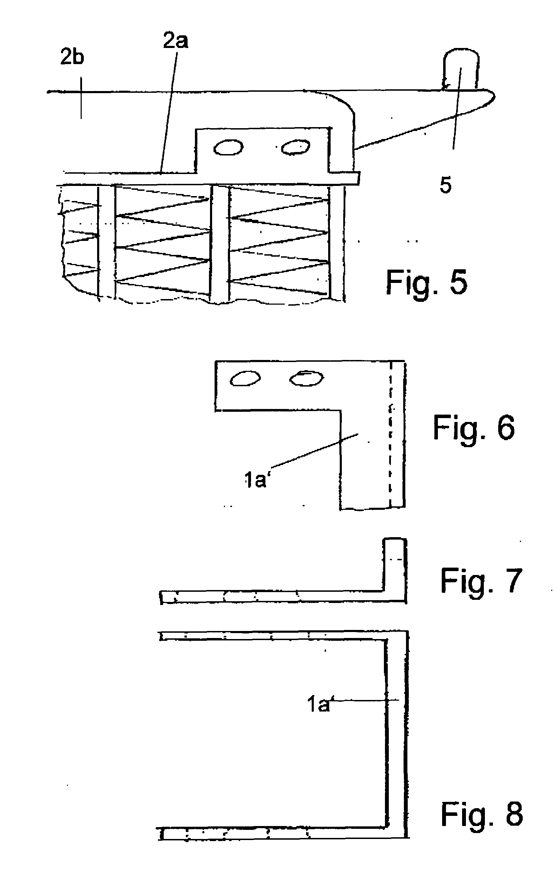

Gemäß dem zweiten Ausführungsbeispiel ist an Stelle eines integriert mit dem Wärmetauscher 1 ausgebildeten, versteifenden Seitenteils 1 a ein außenseitig an dem Wärmetauscher 1 anbringbares, als Verstärkung dienendes Seitenteil 1 a' vorgesehen. Hierbei ist am Boden 2a der Sammelkästen 2 frontseitig eine nach oben (bzw. unten) gezogene Lasche (siehe Fig. 5) ausgebildet, welche vorliegend zur Befestigung des Seitenteils 1 a' mit zwei Bohrungen versehen ist. Das Seitenteil 1 a' ist in Gestalt eines Winkelprofils mit je einem verlängerten Schenkel (siehe Fig. 6) ausgebildet, der mit zwei Bohrungen versehen ist. Die Bohrungen des Seitenteils 1 a' und des Bodens 2a werden für die Montage des Seitenteils 1 a' fluchtend angeordnet, und es werden Schrauben durch die Bohrungen gesteckt und mittels Muttern die Bauteile aneinander fixiert. Andere Möglichkeiten der Befestigung des Seitenteils 1a' am Boden 2a sind möglich. Beispielsweise kann das Seitenteil 1a' an die Bodenlaschen angeclipst oder in Öffnungen/Hinterschneidungen derselben eingehakt oder eingesteckt werden. Kombinationen unterschiedlicher Befestigungsarten sind ebenfalls möglich, beispielsweise kann ein mit einem Schwenken verbundenes Einstecken in eine am unteren Boden vorgesehene Öffnung mit einer am oberen Boden angeordneten Schraubverbindung kombiniert werden.

Obwohl nicht dargestellt, kann an dem Seitenteil 1a' gemäß einer Variante ein zusätzliches Prallelement zur Dämpfung des Aufpralls und ggf. zur Versteifung des Seitenteils 1a' senkrecht zur normalen Fahrtrichtung vorgesehen sein. Alternativ zu einem Winkelprofil kann als Seitenteil auch ein U-Profil verwendet werden (siehe Fig. 8), wobei hierbei bevorzugt oben und unten jeweils vorn und hinten Schenkel zur Befestigung an entsprechenden Bodenlaschen der Sammelkästen ausgebildet sind.

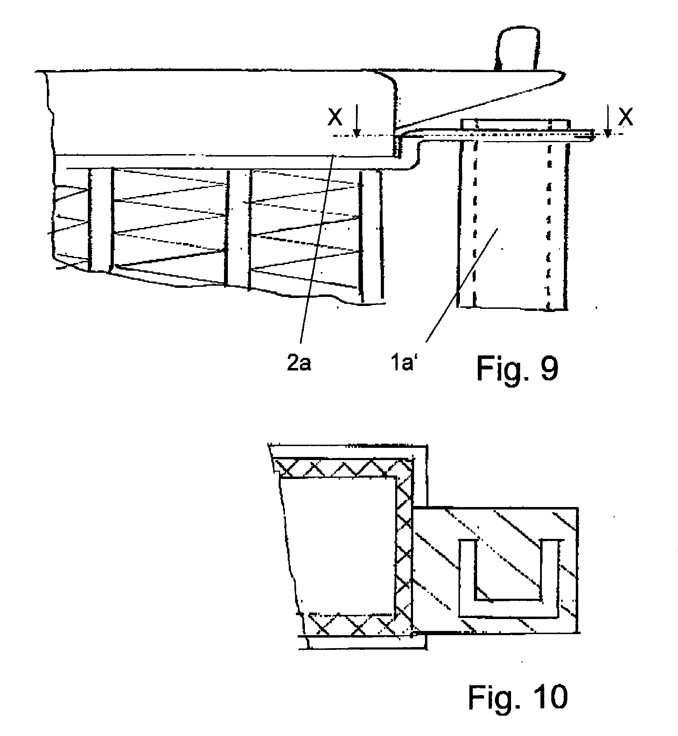

Die Figuren 9 und 10 zeigen als drittes Ausführungsbeispiel einen seitlich überstehend ausgebildeten Boden 2a, welcher mit einer U-förmigen Öffnung zum Einstecken eines entsprechenden, das Seitenteil 1a' bildenden Profils ausgebildet ist. Der Boden 2a ist hierbei im Bereich einer Lasche in einer Stufe nach oben (bzw. unten) versetzt ausgebildet. Die Lasche erstreckt sich über einen wesentlichen Teil der Tiefe des Wärmetauschers, so dass eine ausreichende Kraftübertragung gewährleistet ist.

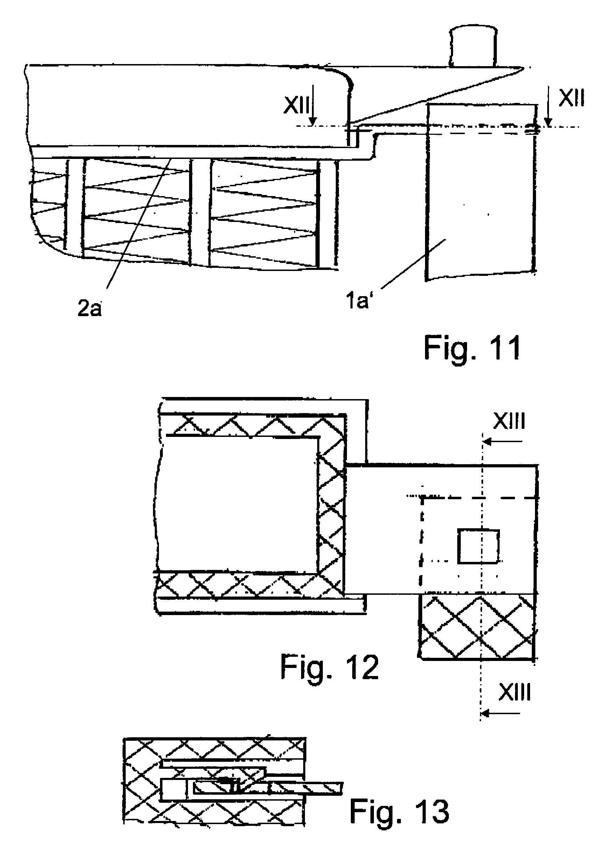

Gemäß einem in den Figuren 11 bis 13 dargestellten, vierten Ausführungsbeispiel ist der Boden 2a des Sammelkastens wiederum mit einer seitlich überstehenden Lasche ausgebildet, die nach oben (bzw. unten) gestuft gebogen ist. An der Lasche ist wiederum ein versteifendes Seitenteil 1a' angebracht, vorliegend mittels einer Clipsverbindung. Diese Lasche ist hierfür mit einer vorliegend rechteckförmigen Öffnung versehen, in weiche ein Haken eines am Seitenteil 1a' ausgebildeten Federarms eingreift und das Seitenteil 1a' an der Lasche sichert (siehe Fig. 13).

Die Anbringung des Seitenteils 1a' gemäß dem fünften Ausführungsbeispiel erfolgt am Kasten 2b, welcher hierfür seitlich überstehend ausgebildet ist und eine Einführöffnung für das Seitenteil 1a' aufweist. Beim Kasten 2b handelt es sich vorliegend um ein Kunststoffteil. Das Seitenteil 1a' wird vorliegend ebenfalls durch ein Kunststoffteil gebildet. Hierbei sind die beiden Kunststoffteile 1a' und 2b mittels einer Schwalbenschwanzführung miteinander in Längsrichtung verschiebbar verbunden, so dass thermisch bedingte Abmessungsänderungen des Wärmetauschers problemlos ausgeglichen werden können, eine seitlich wirkende Kraft jedoch ohne Spiel direkt an die Befestigungseinrichtungen übertragen werden kann.

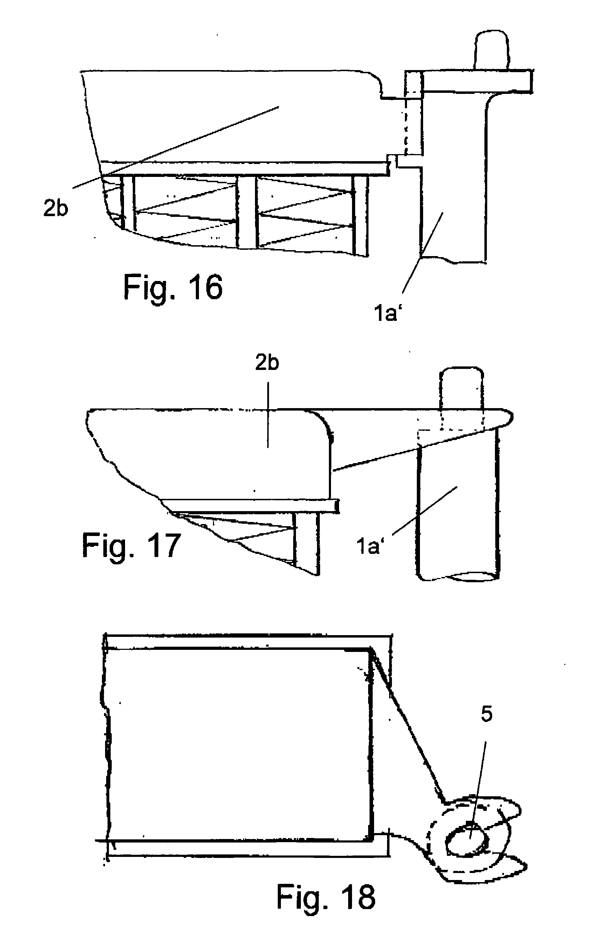

Gemäß dem sechsten, in Fig: 16 dargestellten Ausführungsbeispiel ist das Seitenteil 1a' über den Kasten 2b mit dem Wärmetauscher 1 verbunden. Hierbei ist der Zapfen 5, welcher mit der Befestigungseinrichtung zusammenwirkt, direkt am oberen (und unteren) Ende des Seitenteils 1a' ausgebildet, so dass die Kraftweiterleitung vom Seitenteil 1a' im Falle eines Aufpralls direkt über den Zapfen 5 an die Befestigungseinrichtung erfolgt. Entsprechend der Darstellung von Fig. 16 ist für die Verbindung von Kasten 2b und Seitenteil 1a' im seitlich überstehenden Kasten 2b eine Führung vorgesehen, in welche das Seitenteil von unten her eingeführt ist. Die Führung wird entsprechend dem zuvor beschriebenen Ausführungsbeispiel durch einen Hinterschnitt wie beispielsweise eine Schwalbenschwanzführung gebildet.

Die Figuren 17 und 18 zeigen eine direkte Aufnahme des Zapfens 5, welcher oben am Seitenteil 1 a' ausgebildet ist, in einer außenseitig geöffneten Aufnahme, welche seitlich am Kasten 2b ausgebildet ist. Der Zapfen 5 ist in einer nicht dargestellten Befestigungseinrichtung aufgenommen, so dass - entsprechend dem zuvor beschriebenen Ausführungsbeispiel - eine direkte Kraftweiterleitung im Crashfall erfolgt.

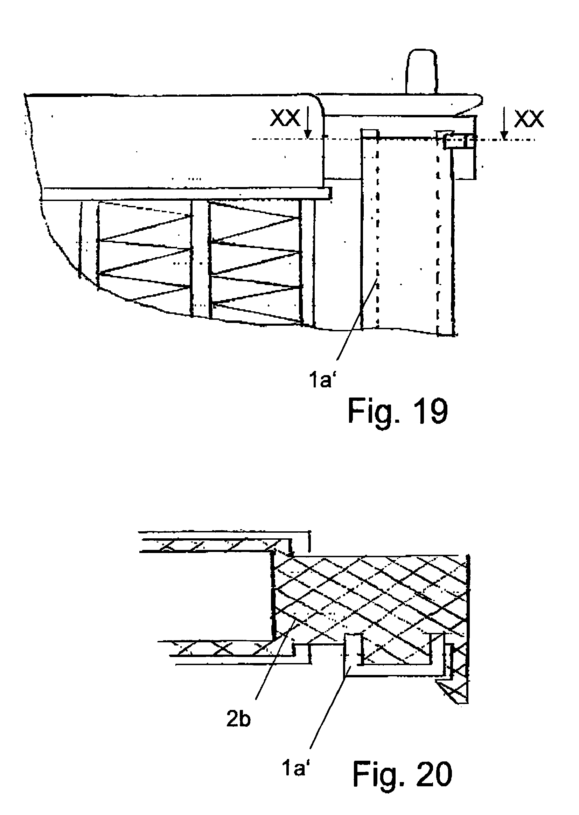

Gemäß dem in den Figuren 19 und 20 dargestellten, achten Ausführungsbeispiel ist das als U-Profil ausgebildete Seitenteil 1 a' frontseitig an seitlich verlängert ausgebildeten Bereiche der Kästen angeclipst, wobei haltende Federarme am Kasten ausgebildet sind. D.h. es kann ein einfaches, unbearbeitetes Metallprofil als Seitenteil verwendet werden.

Im Folgenden werden verschiedene Ausführungsbeispiele von Befestigungseinrichtungen näher erläutert. Die Verwendung derartiger Befestigungseinrichtungen ist nicht auf die erfindungsgemäße Ausgestaltung des Wärmetauschers 1 begrenzt, so dass in Verbindung mit den im Folgenden beschriebenen Befestigungseinrichtungen auch andersartig ausgebildete Wärmetauscher gezeigt sind.

Die Befestigungseinrichtung 6 zur Anbringung des Wärmetauschers 1 an einem Träger 7 weist gemäß dem ersten Ausführungsbeispiel einer Befestigungseinrichtung ein plattenförmiges Kunststoff-Element 8 mit einer Aufnahme 9 (erste Öffnung) für den Zapfen 5, einen eine Sollbruchstelle 10 bildenden Steg 11 und einen Ausweichbereich 12 (zweite Öffnung) auf, wobei die Aufnahme 9 und der Ausweichbereich 12 ein Langloch bilden, welches durch den Steg 11 in zwei unterschiedlich große Bereiche unterteilt ist, wobei der Zapfen 5 vorliegend im kleineren der beiden Bereiche angeordnet ist. Der Steg 11 ist gemäß dem ersten Ausführungsbeispiel abgeknickt ausgebildet, wobei der Knick die Sollbruchstelle bildet und weg vom Zapfen 5 gerichtet ist. Der Zapfen 5 ist, wie auch bei den folgenden Ausführungsbeispielen von Befestigungseinrichtungen, formschlüssig in der Aufnahme 9 aufgenommen.

Um Schwingungen des Wärmetauschers 1 zu dämpfen, können um die Zapfen elastische, dämpfend wirkende Elemente angeordnet sein, wie beispielsweise ein Ring aus Gummi. Alternativ kann auch zumindest im Anlagebereich von Zapfen 5 und Aufnahme 9 ein entsprechendes Element oder eine Beschichtung vorgesehen sein, welche die gleiche Wirkung zeigt. Auch in diesem Fall ist eine formschlüssige Aufnahme des Zapfens, ggf. unter einer gewissen Kompression des dämpfend wirkenden Elements oder der dämpfend wirkenden Beschichtung, vorgesehen.

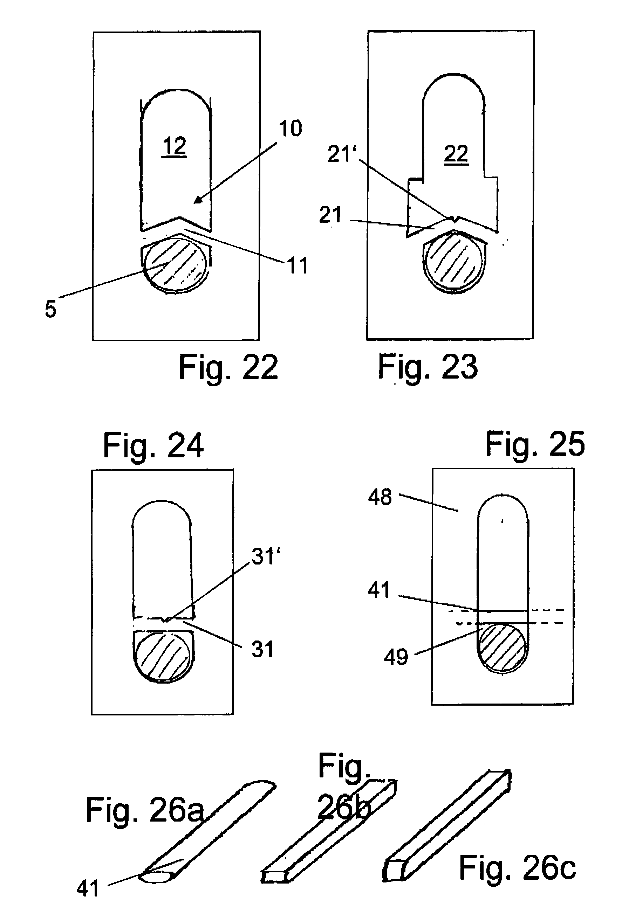

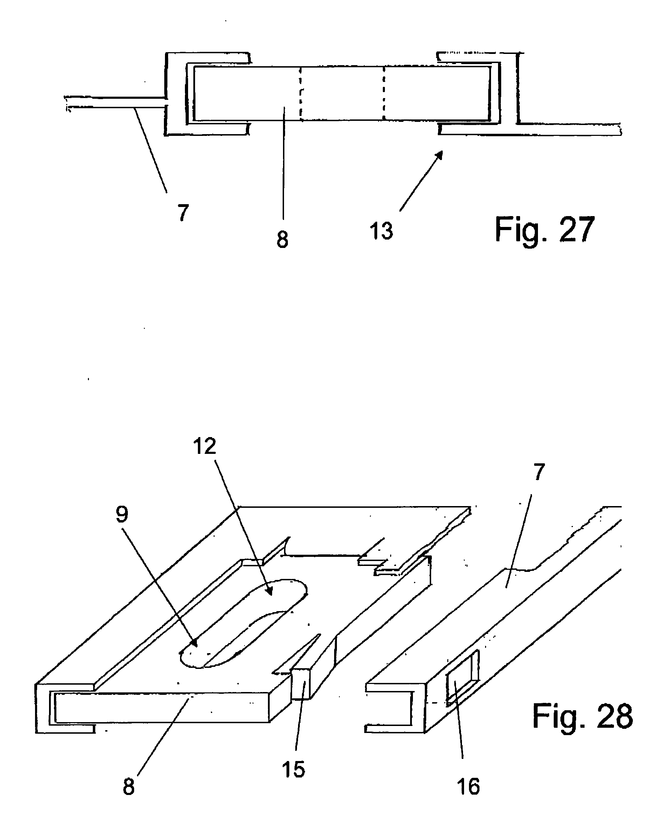

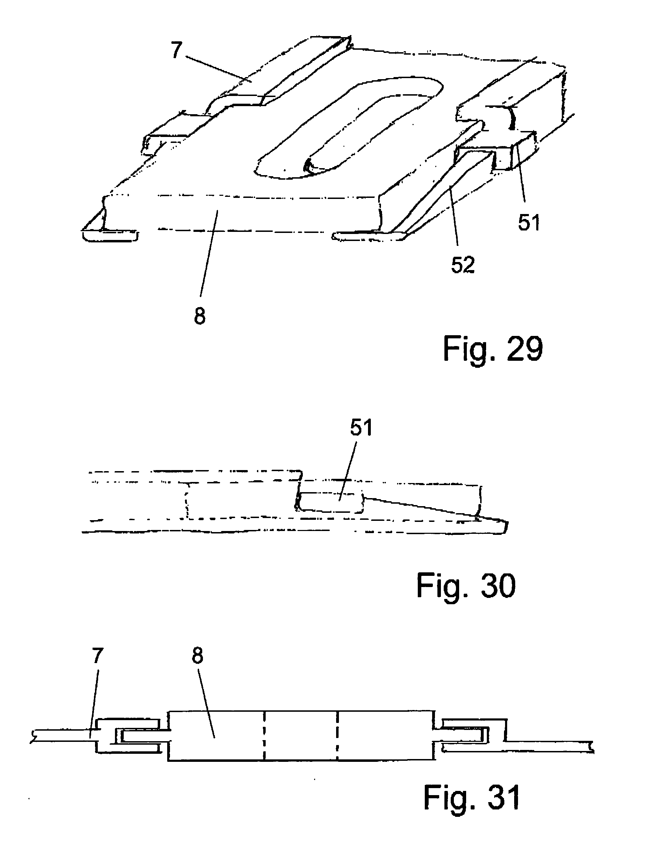

Das plattenförmige Element 8, in welchem die beiden Öffnungen angeordnet sind, weist, wie Fig. 22 zu entnehmen ist, eine rechteckige Gestalt auf, wobei die Materialstärken außen um die Öffnungen herum deutlich größer als die Stegbreite ist, so dass das plattenförmige Element 8 auch im Falle eines durchschnittlichen Crashs und Durchbrechens der Sollbruchstelle des Stegs 11 in Folge der auftretenden Kräfte den Belastungen standhält und dafür sorgt, dass die Zapfen 5 im Bereich der Öffnungen, also vorliegend am gegenüberliegenden Ende der zweiten Öffnung, gehalten wird. Nach einem Unfall kann das plattenförmige Element 8 nach Überprüfung der anderen Bauteile auf Verzug oder sonstige Beschädigungen ausgetauscht werden. Das plattenförmige Element 8 ist, wie aus Fig. 21 ersichtlich, im in entsprechenden Bereich als eine Führung 13 ausgebildeten Träger 7 angeordnet. Ein schematischer Schnitt durch diese erste Anbringungsmöglichkeit ist in Fig. 27 und Fig. 28 dargestellt, wobei der Steg samt Sollbruchstelle nicht in den Figuren 27 und 28 dargestellt ist. Weitere Anbringungsmöglichkeiten sind in den Figuren 29 bis 34 dargestellt und werden an späterer Stelle näher erläutert.

Die Führung 13 des Trägers 7 wird durch zwei gegenüberliegende Nuten gebildet, in welche das plattenförmige Element 8 mit seinen Randbereichen eingeführt ist. Die Sicherung des plattenförmigen Elements 8 erfolgt mit Hilfe einer Clipsverbindung 14, wofür am plattenförmigen Element 8 seitlich ein Federarm 15 eingeschnitten und nach außen gebogen ist, welcher in eine rechteckförmige Öffnung 16 federnd einschnappt, die in einem Nutgrund des Trägers 7 ausgebildet ist. Am hinteren Ende der Führung 13 ist ein Anschlag 17 ausgebildet, an welchem das Ende des Elements 8 anliegt. Der Anschlag 17 ist durch einen nach unten gebogenen Bereich des Trägers 7 gebildet.

Gemäß einem zweiten Ausführungsbeispiel einer Befestigungseinrichtung, welches - soweit im Folgenden nicht ausdrücklich als abweichend erwähnt - dem ersten Ausführungsbeispiel einer Befestigungseinrichtung entspricht, ist im äußeren Knickbereich des Stegs 21 eine Einkerbung 21' vorgesehen. Ferner ist die zweite Öffnung, also der Ausweichbereich 22 derart gegenüber dem Ausweichbereich 12 des ersten Ausführungsbeispiels einer Befestigungseinrichtung verbreitert ausgebildet, dass die beiden Hälften des gebrochenen Stegs 21 in diesem verbreiterten Bereich aufgenommen werden können, so dass der Zapfen ohne einen wesentlichen weiteren Widerstand zum anderen Ende des nunmehr ausgebildeten Langlochs gelangen kann.

Gemäß einem dritten Ausführungsbeispiel einer Befestigungseinrichtung ist der Steg 31 gerade ausgebildet und weist eine Einkerbung 31' auf der dem Zapfen gegenüberliegenden Seite auf, welche die Sollbruchstelle festlegt.

Fig. 25 zeigt ein viertes Ausführungsbeispiel einer Befestigungseinrichtung, wobei im plattenförmigen Element 48, welches vorliegend aus einem festeren Material als bei den vorigen Ausführungsbeispielen von Befestigungseinrichtungen, nämlich aus einer Aluminiumplatte, ausgebildet ist, eine quer verlaufende Öffnung vorgesehen ist, die sich auf beiden Seiten eines Langlochs erstreckt, wobei durch die Öffnung ein Stab 41, vorliegend mit einem länglichen, an den Schmalseiten abgerundeten Querschnitt, wie in Fig. 26a dargestellt, geschoben ist. Durch den Stab 41 wird das Langloch in die beiden Öffnungen gemäß den vorigen Ausführungsbeispielen von Befestigungseinrichtungen unterteilt, nämlich eine Aufnahme 49 und einen Ausweichbereich.

Durch die Wahl des Stabquerschnitts, wobei beispielsweise Querschnitte, wie in den Figuren 26a bis 26c dargestellt möglich sind, lässt sich die Auslösekraft festlegen, bei welcher der Stab 41 bricht. Am Stab 41 kann zudem eine Einkerbung in entsprechender Höhe, also bevorzugt auf der gegenüberliegenden Seite des Zapfens in Höhe des Anlagebereichs desselben am Stab 41 vorgesehen sein.

Gemäß einer Variante des vierten Ausführungsbeispiels einer Befestigungseinrichtung, die in Fig. 26 dargestellt ist, ist in das plattenförmige Element 48 mit einer Nut ausgebildet, in welche ein mit hakenförmigen Vorsprüngen an den Enden versehenes, dünnes, langgestreckt ausgebildetes Element 41 a einclipst wird. Das Element 41 a weist eine Sollbruchstelle in Form einer Einkerbung 41' auf, die auf der Außenseite eines mittig angeordneten, V-förmigen Bereichs des Elements 41 a angeordnet ist, welcher in Verbindung mit dem plattenförmigen Element 48 die Aufnahme für einen Zapfen (nicht dargestellt) bildet. Im zusammengebauten Zustand entspricht die Gestalt des plattenförmigen Elements 48 in Verbindung mit dem Element 41 a dem in Fig. 23 dargestellten, zweiten Ausführungsbeispiel einer Befestigungseinrichtung.

Hierbei kann die Funktion des plattenförmigen Elements 48 auch direkt durch einen Träger, insbesondere einen Kunststoffträger, übernommen werden, so dass lediglich ein kleines, einfach auswechselbares Kunststoffteil im Crashfall auszutauschen ist, welches im Träger in zwei Richtungen formschlüssig aufgenommen und in der dritten Richtung mittels der hakenförmigen Vorsprünge (oder gegebenenfalls auch anderer Mittel, wie Schrauben) gehalten ist. Beispielsweise kann ein Querträger eines Kraftfahrzeugs entsprechend ausgebildet sein.

In den Figuren 29 bis 34 sind weitere Möglichkeiten der Anbringung des plattenförmigen Elements 8, in welchem die Öffnungen mit dazwischen angeordneter Sollbruchstelle (der Einfachheit halber in den Figuren 29 bis 34 nicht dargestellt) ausgebildet sind, an bzw. in einer entsprechend ausgebildeten Führung 14 des Trägers 7 dargestellt, welche ihrerseits am Fahrzeugrahmen angebracht ist.

Die Figuren 29 und 30 zeigen eine andere Möglichkeit der Fixierung des plattenförmigen Elements 8, welches seitlich mit zwei quaderförmigen Fortsätzen 51 ausgebildet ist, welche mittels eines beidseitig des plattenförmigen Elements 8 ausgebildeten Hinterschnitts des Trägers 7 fixiert sind. Jeder Hinterschnitt ist hinter einer Schräge 52 angeordnet, über welche der Fortsatz 51 beim Zusammenbau geschoben wird und hinter welcher der Fortsatz 51 verrastet.

Das plattenförmige Element kann gemäß einer Variante auch entsprechend dem zuvor beschriebenen vierten Ausführungsbeispiel einer Befestigungseinrichtung ausgebildet sein, wobei die Schräge entfallen kann und der Steg, welcher gleichzeitig die Sollbruchstelle bildet, länger ausgebildet sein und zur Fixierung mittels Formschlusses mit zwei entsprechenden Öffnungen im Träger 7 verwendet werden kann. Gemäß einer weiteren Anordnungsmöglichkeit weist das plattenförmige Element 8 seitlich nach außen überstehende, mittig an den Seitenflächen angeordnete Ränder auf, welche in entsprechende, nutförmig ausgebildete Aufnahmen im Träger eingeführt sind (siehe Fig. 31).

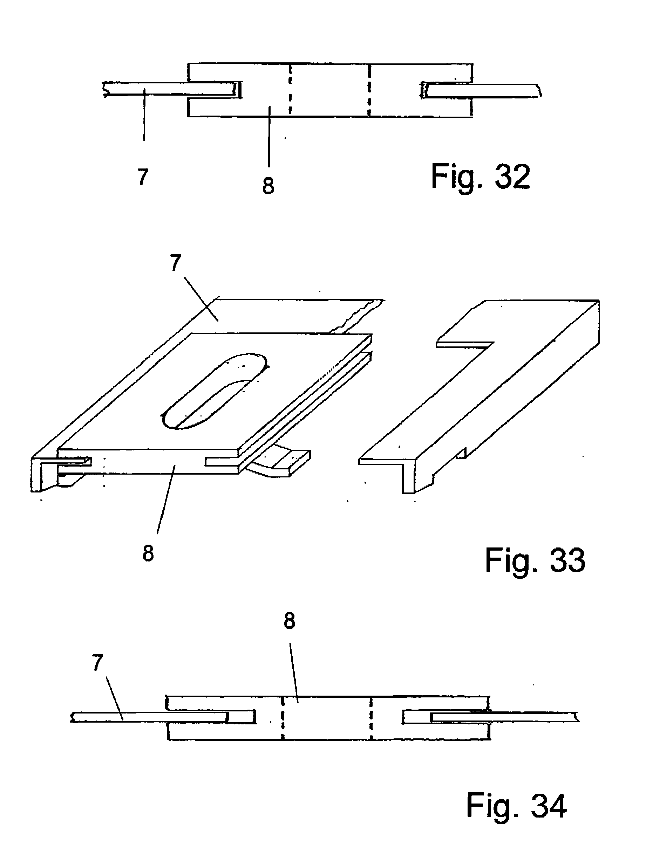

Die nutförmige Gestalt kann, wie in Fig. 32 dargestellt auch im plattenförmigen Element 8 ausgebildet sein, so dass Randbereiche des Trägers 7 in die entsprechenden Nuten ragen. Zur Sicherung kann am Träger 7 eine Aussparung vorgesehen sein, in welche ein Federarm eingreift, der am plattenförmigen Element 8 ausgebildet sein kann (siehe Fig. 33). Die Öffnungs- und Schließrichtung des Federarms liegt hierbei, wie auch bei den zuvor beschriebenen Befestigungen des plattenförmigen Elements, senkrecht zur Krafteinleitungsrichtung im Crashfall, so dass ein selbsttätiges Öffnen ausgeschlossen werden kann. In Einführrichtung des plattenförmigen Elements, sofern diese in Krafteinleitungsrichtung liegt, liegt das plattenförmige Element vorzugsweise an einem am Träger ausgebildeten Anschlag an.

Gemäß einer Abwandlung der dritten Variante können die nutförmigen Vertiefungen plattenförmigen Element 8 auch deutlich tiefer ausgebildet sein, so dass das plattenförmige Element 8 mit viel Spiel vom Träger 7 gehalten wird, was insbesondere in Fahrzeugquerrichtung verläuft, und somit auch als Loslager dienen kann, während bei einer exakten Fixierung die entsprechende Anbringung als Festlager dient.

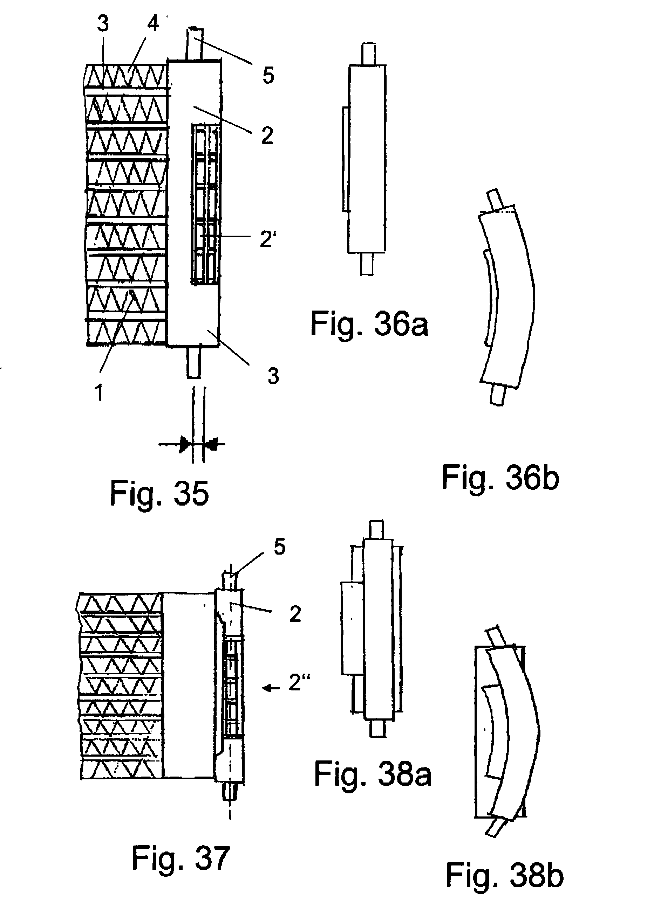

In den Figuren 35 bis 38b sind zwei Beispiele von Wärmetauschern 1 mit seitlich angebrachten Sammelkästen 2 vorgesehen, welche in Hinblick auf die Krafteinleitung im Crashfall verbessert ausgebildet sind, die jedoch nicht entsprechend der vorliegenden Erfindung ausgebildet sind und lediglich in Hinblick auf die Erläuterung der Befestigungseinrichtungen 6 aufgeführt sind. Die vom Stoßfängerträger kommende Kraft wird hierbei möglichst großflächig an den Wärmetauscher 1 und von demselben auf die Zapfen 5 übertragen. Um eine großflächige Übertragung zu ermöglichen, lokale Spannungsspitzen und damit auch eine Beschädigung des Wärmetauschers 1 zu vermeiden, sind die beiden seitlich angeordneten Sammelkästen 2 des Wärmetauschers 1 versteift ausgebildet.

Im Falle des in den Figuren 35 und 36a, b dargestellten Wärmetauschers 1 sind hierfür durchgehend mit den Sammelkästen 2 verbundene Rippen 2' vorgesehen, welche die Biegesteifigkeit des gesamten Wärmetauschers 1 erhöhen. Im Crashfall biegt sich der gesamte Wärmetauscher 1 durch, wie in Fig. 36b übertrieben dargestellt ist.

Gemäß dem in den Figuren 37 und 38a, b dargestellten Wärmetauscher 1 ist eine Verstärkungsstruktur 2" vorgesehen, welche dort mit den Sammelkästen 2 verbunden ist, wo die Durchbiegung am geringsten ist, also im Bereich der Zapfen 5. In diesem Fall biegt sich im Crashfall die Verstärkungsstruktur durch, die Sammelkästen jedoch nicht oder nur in verringertem Maße, wodurch eine Belastung des Rests des Wärmetauschers vermindert wird (siehe Fig. 38b). Um hierbei eine möglichst geringe Biegung zu erreichen, ist der Abstand senkrecht zur Kraftwirkungsrichtung zwischen der Stelle der Krafteinleitung und dem Zapfen 5 möglichst gering zu halten.

Eine derartige Befestigungseinrichtung lässt sich für alle Arten von Wärmetauschern verwenden, d.h. sie ist nicht auf gelötete Wärmetauscher beschränkt, auch wenn vorstehend gelötete Wärmetauscher beschrieben sind. Entsprechende Ausgestaltungen sind insbesondere auch für mechanisch gefügte Kühler mit runden, ovalen oder flachen Rohren, die in ein Rippenpaket mit entsprechenden Öffnungen eingeschoben sind und durch Aufweiten mit den Rippen verbunden werden, geeignet.

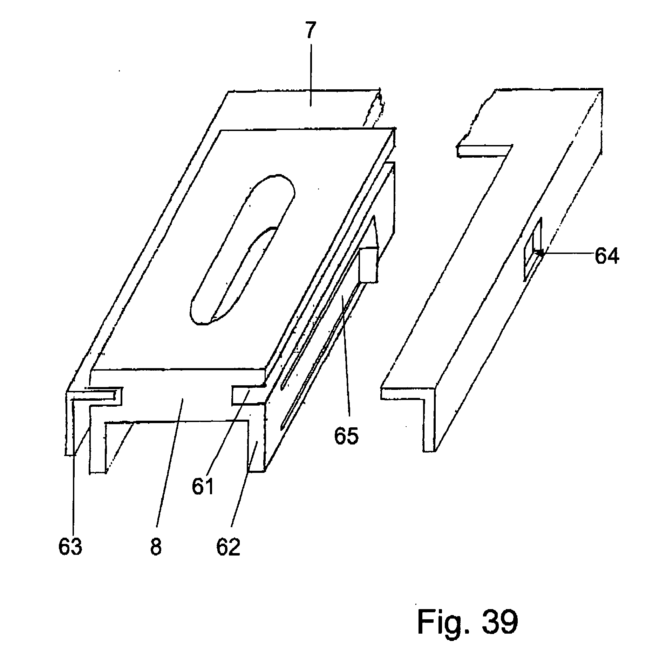

Fig. 39 zeigt eine perspektivische, aufgebrochene Darstellung einer vierten Variante einer Anbringungsmöglichkeit einer Befestigungseinrichtung. Hierbei weist das plattenförmige Element 8 - vergleichbar der in den Figuren 32 und 33 dargestellten dritten Variante - seitliche Nuten 61 auf, wobei die Nuten 61 vorliegend nur auf drei Seiten des plattenförmigen Elements 8 ausgebildet sind. In diese Nuten ragen Ränder des Trägers 7, wobei ein gewisses Spiel vorgesehen ist.

Ferner sind zwei an einander gegenüberliegenden Seiten des plattenförmigen Elements 8 angeordnete, senkrecht nach unten abstehende Schenkel 62 einstückig mit dem plattenförmigen Element 8 ausgebildet. In diesen Schenkeln 62 ist jeweils ein Federarm 65 mit einem nach außen vorstehenden Vorsprung in Form einer Nase ausgebildet. Die Federarme 65 erstrecken sich in Zusammenbaurichtung, d.h. in der Richtung, in welcher das plattenförmige Element 8 auf den Träger 7 geschoben wird. Auch der Träger 7 weist Schenkel 63 auf, die parallel zu und relativ nah bei den Schenkeln 62 angeordnet sind. Das Spiel zwischen Träger 7 und plattenförmigem Element 8 ist hierbei bevorzugt kleiner als die Höhe der Nase, d.h. die Länge, welche die Nase über die Fläche des Schenkels 62 in Richtung des Schenkels 63 übersteht, in jedem Fall aber kleiner als die Höhe beider Nasen zusammen. Im zusammengebauten Zustand auf gleicher Höhe mit den Nasen der Federarme ist in den Schenkeln 63 des Trägers 7 jeweils ein rechteckförmiger Durchbruch ausgebildet, in welchen die entsprechende Nase ragt, wodurch zwei Clipsverbindungen 64 ausgebildet werden.

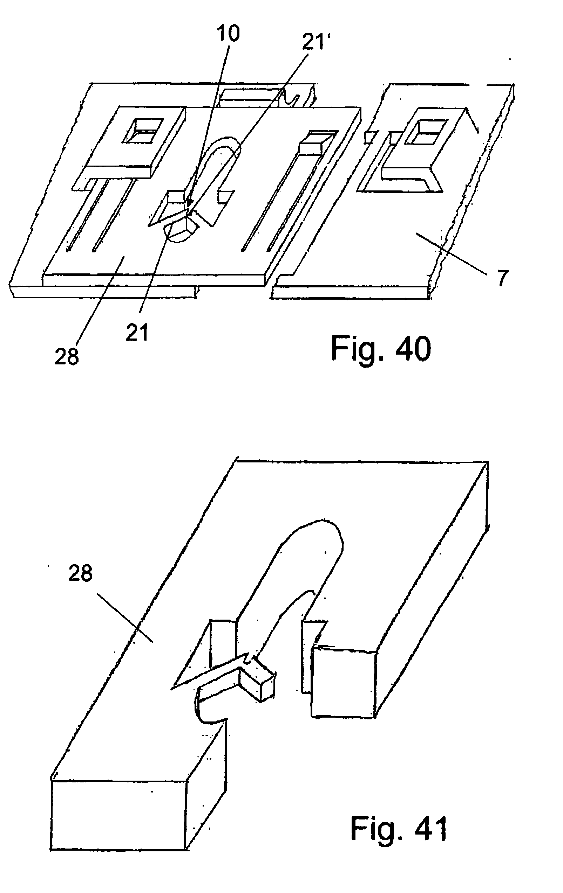

Fig. 40 zeigt eine perspektivische, aufgebrochene Darstellung einer Befestigungseinrichtung gemäß einer ersten Variante des zweiten Ausführungsbeispiels von Fig. 23 in Verbindung mit einer weiteren Variante einer Anbringungsmöglichkeit derselben. Gemäß dieser Variante des zweiten Ausführungsbeispiels einer Befestigungseinrichtung, welches - soweit im Folgenden nicht ausdrücklich erwähnt - dem zweiten Ausführungsbeispiel einer Befestigungseinrichtung entspricht, ist wiederum im äußeren Knickbereich des Stegs 21 eine Einkerbung 21' vorgesehen. Im Unterschied zum zweiten Ausführungsbeispiel einer Befestigungseinrichtung ist jedoch die Dicke des Stegs 21 gegenüber der Dicke angrenzender Bereiche erhöht, so dass die Grenzkraft zum Brechen des Stegs 21 an der Sollbruchstelle 10 erhöht wird.

Zur Fixierung des plattenförmigen Elements 28 in einem Träger 7, welcher eine Öffnung im Bereich unter der Öffnung im plattenförmigen Element 28 mit der Sollbruchstelle 10 aufweist, sind am plattenförmigen Element 28 durch Schlitze gebildete, parallel zueinander angeordnete zwei Federarme mit je einem nach oben ragenden, keilförmigen Vorsprung ausgebildet. Die keilförmigen Vorsprünge der Federarme gelangen im montierten Zustand des plattenförmigen Elements 28 in rechteckförmige Öffnungen in je einem laschenartig nach oben gebogenen Bereich des Trägers 7, der sich parallel zur weiteren Fläche des Trägers 7 erstreckt und etwa entsprechend der Materialdicke des plattenförmigen Elements 28 zuzüglich der Materialdicke des Trägers 7 nach oben gebogen ist, so dass das plattenförmige Element 28 durch eine (lösbare) Clipsverbindung sicher zwischen den beiden Bereichen des Trägers 7 aufgenommen werden kann. Ein seitlich des plattenförmigen Elements 28 angeordneter Übergangsbereich stellt eine zusätzliche Sicherung gegen ein seitliches Verschieben des plattenförmigen Elements 28 sicher. Das hintere Ende des plattenförmigen Elements liegt im eingebauten Zustand an einem am Halter ausgebildeten Anschlag an. Durch die Wahl der Position der Öffnung, der Öffnungsgröße, der Anordnung und Abmessung der keilförmigen Vorsprünge der Federarme, der Position des Anschlags u.ä. können ein ggf. gewünschtes Spiel und Fest- und Loslager festgelegt werden.

Um in Höhenrichtung des plattenförmigen Elements 28 den Bauraum optimieren zu können, kann die Materialstärke der Federarme vorzugsweise etwa um die Höhe des keilförmigen Vorsprungs verringert sein, so dass ausreichend Raum für das Durchbiegen des Federarms vorhanden ist und dadurch der Abstand der parallel verlaufenden Bereiche des Trägers auf die Materialdicke des plattenförmigen Elements minimiert werden kann.

Fig. 41 zeigt eine perspektivische, aufgebrochene Darstellung einer Befestigungseinrichtung gemäß einer zweiten Variante des zweiten Ausführungsbeispiels einer Befestigungseinrichtung von Fig. 23, gemäß der Steg 21 dünner als der angrenzende Bereich ausgebildet ist.

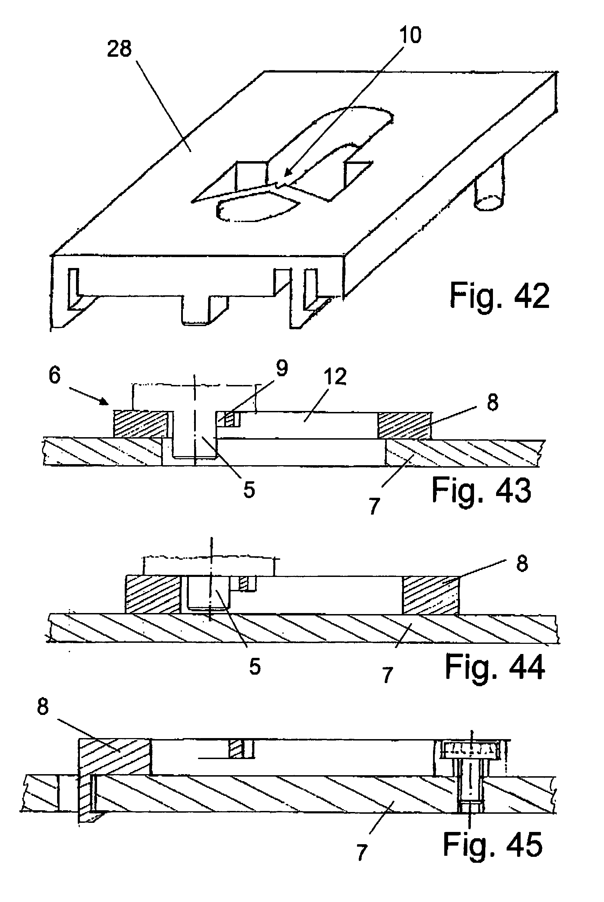

Fig. 42 zeigt eine perspektivische Darstellung einer weiteren Anbringungsmöglichkeit einer Befestigungseinrichtung gemäß dem zweiten Ausführungsbeispiel einer Befestigungseinrichtung. Der Bereich der Sollbruchstelle 10 ist entsprechend dem zweiten Ausführungsbeispiel einer Befestigungseinrichtung ausgebildet.

Im Unterschied zu den zuvor beschriebenen Anbringungsmöglichkeiten wird das plattenförmige Element 28 gemäß der in Fig. 42 dargestellten Anbringungsmöglichkeit nicht parallel zum Träger in eine Aufnahme o.ä. eingeschoben sondern von oben her aufgesetzt und dadurch aufgeclipst. Hierfür sind auf der Unterseite des plattenförmigen Elements 28 Federarme und Positionierungszapfen vorgesehen, vorliegend in einem Arbeitsgang mit dem plattenförmigen Element spritzgegossen. Die Federarme greifen durch im Träger vorgesehene Öffnungen, so dass sie mit ihren keilförmigen Vorsprüngen den Träger hintergreifen und in Zusammenbaurichtung das plattenförmige Element 28 am Träger sichern. Die Positionierungszapfen gelangen in im Träger ausgebildete Öffnungen, so dass zusätzlich eine Fixierung in einer oder mehreren Richtungen senkrecht zur Zusammenbaurichtung möglich ist. Auch in diesem Fall wird durch die Wahl der Abmessungen, der Anordnung und/oder des Spiels eine Realisierung als Fest- oder Loslager möglich.

Figur 43 zeigt schematisch eine Anbringung des plattenförmigen Elements 8 auf einem Träger 7, in welchem eine Öffnung ausgebildet ist. Ein Zapfen 5 des mit Hilfe der Befestigungseinrichtung 6 zu haltenden Bauteils ragt hierbei bis in die Öffnung des Trägers 7. Das plattenförmige Element 8 kann am Träger mittels Schrauben (siehe beispielhafte Darstellung von Fig. 45, rechts), Clipsverbindungen (siehe beispielhafte Darstellung von Fig. 45, links), am plattenförmigen Element und/oder am Träger ausgebildeten Haltern oder auf sonstige Weise fixiert sein. Dadurch, dass der Zapfen bis in eine am Träger 7 vorgesehene Öffnung ragt, die größer als die Aufnahme 9 sowie der Ausweichbereich 12 ist, kann eine zweite Haltestufe für besonders große Kräfte, die zu einer Verformung des Materials des plattenförmigen Elements führen, gebildet werden.

Eine Variante, bei der keine Öffnung im Träger 7 ausgebildet ist, ist in Fig. 44 dargestellt. Hierbei ist die Länge des Zapfens 5 geringer als die Dicke des plattenförmigen Elements 8.

## Patentansprüche

1. Schutzvorrichtung für einen Wärmetauscher (1) eines Kraftfahrzeugs, welcher mit mindestens einer Anbindungsstelle, insbesondere einem Zapfen (5), ausgebildet ist, die der Anbringung des Wärmetauschers (1) an einer tragenden Struktur des Kraftfahrzeugs dient, **dadurch gekennzeichnet, dass** die Schutzvorrichtung mindestens ein ein- oder mehrteilig ausgebildetes Seitenteil (1a; 1a') für den Wärmetauscher (1) aufweist, das in einer Richtung, die der normalen Luftanströmrichtung des Wärmetauschers (1) entspricht, fest mit dem Wärmetauscher (1) verbunden ist, und das entgegen der Luftanströmrichtung gegenüber dem Wärmetauscher (1) vorstehend ausgebildet ist.

2. Schutzvorrichtung nach Anspruch 1, **dadurch gekennzeichnet, dass** der Wärmetauscher (1) ein Fallstromwärmetauscher mit mindestens einem in horizontaler Richtung verlaufend angeordneten Sammelkasten (2) ist.

3. Schutzvorrichtung nach Anspruch 1 oder 2, **dadurch gekennzeichnet, dass** das Seitenteil (1a') in mindestens einer Richtung senkrecht zur Anströmrichtung relativ zum Wärmetauscher (1) verschiebbar ist.

4. Schutzvorrichtung nach einem der vorhergehenden Ansprüche, **dadurch gekennzeichnet, dass** am Seitenteil (1a) mindestens ein mit demselben verbundenes Prallelement (1') angebracht ist, welches im Crashfall eine Kraft direkt an das Seitenteil (1 a) weiterleitet ohne in Kontakt mit dem Wärmetauschernetz des Wärmetauschers (1) zu gelangen.

5. Schutzvorrichtung nach Anspruch 4, **dadurch gekennzeichnet, dass** die bei der maximalen Aufprallkraft eines Elements, auf welche die Schutzvonichtung ausgelegt ist, auftretende Verformung des Prallelements (1') maximal so groß ist, dass die vorderste Fläche des Prallelements (1'), welche in Kontakt mit dem aufprallenden Element gelangt ist, räumlich vor der Frontfläche des Wärmetauschernetzes angeordnet ist.

6. Schutzvorrichtung nach Anspruch 4 oder 5, **dadurch gekennzeichnet, dass** das Seitenteil (1 a) mindestens zweiteilig ausgebildet ist, wobei die beiden Seitenteile (1a) durch das Prallelement (1') miteinander verbunden sind, wobei das Prallelement (1') eine Relativbewegung der Seitenteile (1a) in Richtung einer Verbindungslinie der Seitenteile (1 a) zulässt und eine Bewegung in einer Ebene senkrecht zur Verbindungslinie der Seitenteile (1 a) verhindert.

7. Schutzvorrichtung nach einem der vorhergehenden Ansprüche, **dadurch gekennzeichnet, dass** das Seitenteil (1a') durch ein durchgehendes Metallprofil gebildet ist.

8. Schutzvorrichtung nach einem der vorhergehenden Ansprüche, **dadurch gekennzeichnet, dass** das Seitenteil (1a') mittels einer Clipsverbindung am Wärmetauscher (1) angeclipst ist.

9. Schutzvorrichtung nach einem der vorhergehenden Ansprüche, **dadurch gekennzeichnet, dass** das Seitenteil (1a') mittels einer Führung, insbesondere mittels eines Hinterschnittes wie beispielsweise einer Schwalbenschwanzführung, am Wärmetauscher (1) in Längsrichtung des Seitenteils (1a') zumindest leicht verschiebbar angebracht ist.

10. Schutzvorrichtung nach einem der vorhergehenden Ansprüche, **dadurch gekennzeichnet, dass** das Seitenteil (1 a') an einer am Boden (2a) eines Sammelkastens (2) ausgebildeten Lasche angebracht ist.

11. Schutzvorrichtung nach einem der vorhergehenden Ansprüche, **dadurch gekennzeichnet, dass** das Seitenteil (1a') an einem am Kasten (2b) eines Sammelkastens (2) ausgebildeten Fortsatz angebracht ist.

12. Schutzvorrichtung nach einem der vorhergehenden Ansprüche, **dadurch gekennzeichnet, dass** am Seitenteil (1a') endseitig sich nach außen erstreckende Zapfen (5) ausgebildet sind, welche als Anbindungsstellen des Wärmetauschers (1) dienen und welche in die Befestigungseinrichtungen (6) des Wärmetauschers (1) eingreifen.

13. Schutzvorrichtung nach einem der vorhergehenden Ansprüche, **dadurch gekennzeichnet, dass** am Kasten (2b) des Wärmetauschers (1) Zapfen (5) ausgebildet sind, welche in die Befestigungseinrichtungen (6) des Wärmetauschers (1) eingreifen.

14. Schutzvorrichtung nach einem der vorhergehenden Ansprüche, **dadurch gekennzeichnet, dass** das Seitenteil (1 a') zwischen zwei Zapfen (5) angeordnet ist, wobei die durch die Zapfen (5) verlaufende Achse das Seitenteil (1a') schneidet.

15. Wärmetauscheranordnung mit einem an einem Träger (7) mittels einer Befestigungseinrichtung (6) angebrachten Wärmetauscher (1), **gekennzeichnet durch** eine Schutzvorrichtung nach einem der Ansprüche 1 bis 14, wobei Teil der Schutzvorrichtung für den Wärmetauscher (1) mindestens eine Befestigungseinrichtung (6) mit einer Sollbruchstelle ist, welche bei Überschreiten einer in Richtung der normalen Luftanströmung des Wärmetauschers (1) wirkenden Grenzlast eine begrenzte Relativbewegung des Wärmetauschers (1) zu einem Träger (7) zulässt, zwischen denen die Befestigungseinrichtung (6) angeordnet und an dem der Wärmetauscher angebracht ist.
